# EUROPEAN PATENT SPECIFICATION

(11) **EP 1 321 896 B1**
(45) Date of publication and mention of the grant of the patent: **30.12.2009**
(21) Application number: 02368124.0
(22) Date of filing: 13.11.2002
(51) Int. Cl.: G06T 3/40

(54) **Method and circuits for scaling images using neural networks**
Verfahren und Schaltungen zur Bildskalierung mit Hilfe neuronaler Netzwerke
Procédé et circuits de mise à l'échelle d'images utilisant des réseaux neuronaux

(30) Priority: 21.12.2001 EP 01480146
(43) Date of publication of application: 25.06.2003
(73) Proprietor: International Business Machines Corporation, Armonk, NY 10504 (US)
(72) Inventor: Imbert De Tremiolles, Ghislain, 06140 Vence (FR); Tannhof, Pascal, 77300 Fontainebleau (FR)
(74) Representative: Therias, Philippe

(56) References cited:
- WO-A-96/16380
- US-A- 5 327 257
- US-A- 5 469 216
- US-B1- 6 323 905
- TAMAKI O ET AL: "Enlargement of digital images by using neural networks" BULLETIN OF THE FACULTY OF ENGINEERING, UNIVERSITY OF THE RYUKYUS UNIV. RYUKYUS JAPAN, no. 59, March 2000 (2000-03), pages 7-15, XP009054025 ISSN: 0389-102X
- DAVID R ET AL: "Noise reduction and image enhancement using a hardware implementation of artificial neural networks" PROCEEDINGS OF THE SPIE - THE INTERNATIONAL SOCIETY FOR OPTICAL ENGINEERING SPIE-INT. SOC. OPT. ENG USA, vol. 3728, 1999, pages 212-221, XP002345531 ISSN: 0277-786X
- MADANI K ET AL: "ZISC-036 neuro-processor based image processing" BIO-INSPIRED APPLICATIONS OF CONNECTIONISM. 6TH INTERNATIONAL WORK-CONFERENCE ON ARTIFICIAL AND NATURAL NEURAL NETWORKS, IWANN 2001. PROCEEDINGS, PART II. (LECTURE NOTES IN COMPUTER SCIENCE VOL.2085) SPRINGER-VERLAG BERLIN, GERMANY, 15 June 2001 (2001-06-15), pages 200-207, XP002345532 ISBN: 3-540-42237-4
- TAGUCHI A ET AL: "Enlargement of digital images by using multi-neural networks" PROCEEDINGS OF THE SPIE - THE INTERNATIONAL SOCIETY FOR OPTICAL ENGINEERING SPIE-INT. SOC. OPT. ENG USA, vol. 3646, 1999, pages 112-119, XP002345533 ISSN: 0277-786X
- DAVID R ET AL: "description and practical uses of ibm zisc036" PROCEEDINGS OF THE SPIE, SPIE, BELLINGHAM, VA, US, vol. 3728, 1999, pages 198-211, XP002287812 ISSN: 0277-786X
- PATENT ABSTRACTS OF JAPAN vol. 1999, no. 04, 30 April 1999 (1999-04-30) & JP 11 017934 A (VICTOR CO OF JAPAN LTD), 22 January 1999 (1999-01-22)
- DAUGMAN J. G.: "Relaxation Neural Network for Non-Orthogonal Image Transforms" IEEE INT. CONF. ON NEURAL NETWORKS, 27 July 1988 (1988-07-27), pages 547-560, XP010077930

## Description

### FIELD OF THE INVENTION

The present invention relates to data processing and more particularly to a method and circuits for scaling images using neural networks.

### BACKGROUND OF THE INVENTION

In the particular field of image processing, recovering missing pixels or scaling an image (generally towards a greater size or format) are extensively performed operations. To determine the pixel value at a missing location, a classic method consists to take a small area of the data that is determined by a sampling window and to apply it to an interpolator. A polynomial equation can be used to that purpose. Then, the degree and the coefficients of this equation, which in turn determine the filter coefficients, are fixed. This standard method has some inconveniences. The identification of the adequate polynomial equation is not easy. Said coefficients are generally fixed once for all, and thus are clearly not optimized for all the data or they have to be recalculated for each set of data which consumes a lot of processing time. The number of coefficients is limited (generally lower than 20), making the interpolation very approximate in most cases. For example, if black and white type images are processed, the interpolation may create gray levels that do not exist in the original image. A great number of arithmetic operations have to be performed that generally imply a number of serial computations, making the interpolation very slow. Finally, the time for completing the interpolation depends on the number of coefficients and is thus variable for each set of data.

In today's data processing, a lot of recognition, prediction, and computation tasks are performed using reference databases used to characterize input data. Depending upon the problem to be solved, these reference databases contain patterns that are sub-images, sub-signals, subsets of data and combination thereof. The patterns that are stored in these reference databases are referred to herein below as prototypes. As known for those skilled in the art, they are generally represented by a vector, i.e. an array in a space of a given dimension. Well-known methods for characterizing new (unknown) patterns, referred to herein below as input patterns, using reference databases are based upon the input space mapping algorithms like the K-Nearest-Neighbor (KNN) or the Region Of Influence (ROI). The base principle of these algorithms is to compute the distance (Dist) between the input pattern and each of the stored prototypes in order to find the closest one(s) depending upon predetermined thresholds or not. US patent 5,717,832 assigned to IBM Corp describes neural semiconductor chips and artificial neural networks (ANNs) of a new type. These ANNs, referred to hereinbelow as ZISC ANNs, are based on such input space mapping algorithms mentioned above and include innovative elementary processors, referred to hereinbelow as the ZISC neurons (ZISC is a registered trade mark of IBM Corp). ZISC neurons are described in US patent 5,621,863 still assigned to IBM Corp. An essential characteristic of the ZISC neurons lies in their ability to work in parallel, i.e. when an input pattern is presented to the ZISC ANN, all the neurons compute the distance between the input pattern and each of the prototypes stored therein at the same time.

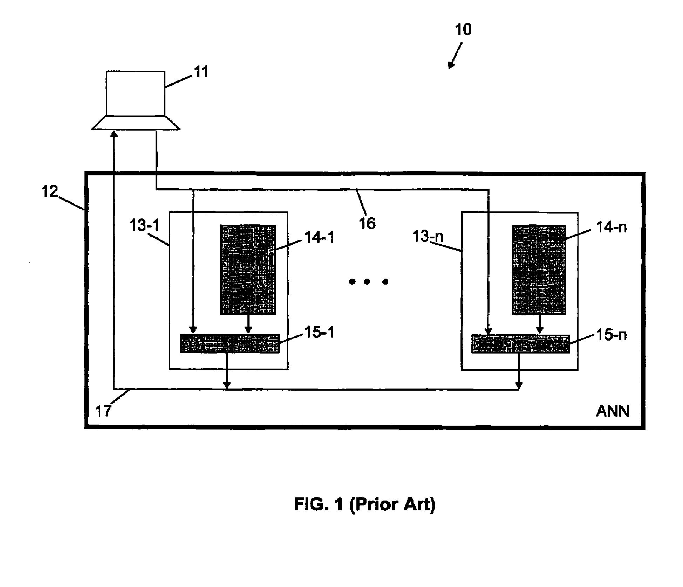

Fig. 1 is the basic hardware that will be used to illustrate the main principle of the distance evaluation technique as it is currently practiced to date in a ZISC ANN. Now turning to Fig. 1, there is shown the architecture of a neural system 10 comprising a host computer 11, e.g. a personal computer (PC), and a conventional ZISC ANN referenced 12 including a plurality of neurons 13-1 to 13-n (generically referenced 13 hereinafter). Physically, the ANN 12 can consist of a printed circuit board having a few ZISC chips, e.g. ZISC036 chips which include 36 neurons each, mounted thereon. Each neuron, e.g. 13-1, is schematically reduced to two essential elements for the sake of simplicity : a prototype memory 14-1 dedicated to store a prototype when the neuron has learned an input pattern during the learning phase and a distance evaluator 15-1. Data-in bus 16 sequentially applies the set of components of an input pattern to all neurons 13 of the ANN 12 in parallel and data-out bus 17 transmits the results of the distance evaluation process, typically the distance and the category to the host computer 11. As taught in the above mentioned US patent 5,621,863, when an input pattern is fed into a neuron 13 through data bus 16, it is compared in the distance evaluator 15 with the prototype to evaluate the distance therebetween. The ZISC ANN 12 is configured to have all the neurons working in parallel, so that the result generally consists of a pair of values: the minimum distance which characterizes the closest input pattern and the category associated thereto. For the sake of simplicity, the category register is not shown in Fig. 1, it is considered to be included in the distance evaluator 15. As apparent in Fig. 1, the ZISC ANN architecture is such that all the distance evaluations are simultaneously performed in all the neurons composing the ANN.

The paper entitle " Enlargement of Digital Images by using Neural Networks" by Osamu TAMAKI, Hiroshi KINJO and Tetsuhiko YAMAMOTO describes an image enlargement method to improve the degraded enlarged image obtained using conventional methods by using neural networks. For network training, training data sets of five shape patterns and three brightness patterns are prepared. A nine-inputs and four-outputs neural network is used. The input of the neural net is a 3x3 area of the orignal image and the output is a 2x2 area of the enlarged and modified image. The neural network is trained to output a 2x2 image area in which the enlarged parts correspond to the center point of a 3x3 input image. The results reveal that the performance of the enlarged image using a combination of the CC and neral net methods is better than that when using only CC. When using the combined CC and neural net process, degradation of the enlarged image is improved.

The paper entitled "Noise Reduction and Image Enhancement Using a Hhardware Implementation of Artificial Neural Networks" by robert DAVID , Erin WILLIAMS, Ghislain de TREMOILLES and Pascal TANNHOF, concerns a neural based solution developed for noise reduction and image enhancement using the ZISC, an IBM hardware processor which implements the Restricted Coulomb Energy algorithm (RCE) and the K-Nearest Neighbor algorithm (KNN). Artificial neural networks present the advantages of processing time reduction in comparison with classical models, adaptability, and the weighted property of pattern learning. The goal of the developed application is image enhancement in order to restore old movies (noise reduction, focus correction, etc.) To improve digital television images,or to treat images which require adaptive processing (medical images, spatial images, special effects, etc.). Image results show a quatitative improvement over the noisy image as well as the efficiency of this system.

US5327257 discloses digital image processing apparatus for interpolating a digital input image into an interpolated output image, comprising an input buffer for accommodating pixel data of the input image and a coefficient buffer for storing precalculated interpolation weighting coefficients prior to real time image interpolation. The coefficient buffer comprises a first memory segment for containing a set of precalculated sharp interpolating weighting coefficients obtained by using a sharp interpolating algorithm, a second memory segment for containing a set of precalculated soft weighting coefficients obtained by using a soft interpolating algorithm and a third memory segment for containing a set of precalculated weighting coefficients representative of a predetermined characteristic of the input image, such as contrast or density. The processing apparatus further comprises interpolation logic for calculating a sharp interpolated output image pixel, a soft interpolated output image pixel, and a value for the image characteristic, using the input pixel data and the precalculated weighting coefficients, and an algorithm implementation controller for calculating a resultant output pixel by combining the sharp and soft interpolated pixel values as a function of the image characteristic.

US 6 323 905 discloses a block-based adaptive image scaling. During the training phase, the coefficients necessary to implement the image scaling are generated.

The articles entitled "Neuro-processor Based Image Processing." By Kurosh MADANI, Ghislain de TREMOILLES and Pascal TANNHOF deals with neutral based image processing and developed solutions using the ZISC-036 neuro-processor, an IBM hardware processor which implements the Restrictied Coulomb Energy Algorithm (RCE) and the K-Nearest Neighbor algorithm (KNN) . The developed neural based techniques have been applied for image enhancement in order to restore old movies ( noise reduction, focus correction, etc.) To improve digital television images , or to treat images which require processing

WO96/16380 discloses a system and method for adaptive interpolation of image data selects one of a plurality of different interpolation kernel functions based on one or more variables, such as a selected format for the visible presentation of the interpolated image data on an output imaging medina, a selected type of the output imaging media for visible presentation of the interpolated image data, and an appearance characteristic, such as sharpness or smoothness, of the visible presentation of the interpolated image data. The system and method select an appropriate interpolation kernel function to improve an appearance of the visible presentation of the interpolated image data on the output imaging media.

### SUMMARY OF THE INVENTION

According to the present invention there is provided a system for scaling images according to the appended independent claim 1, and a method for scaling images according to the appended independent claim 9. Preferred embodiments are defined in the dependent claims.

The invention itself, however, as well as other objects and advantages thereof, may be best understood by reference to the following detailed description of an illustrated preferred embodiment to be read in conjunction with the accompanying drawings.

### BRIEF DESCRIPTION OF THE DRAWINGS

Fig. 1 schematically shows the architecture of a neural classifier consisting of a conventional ANN using ZISC neurons under the control of a host computer wherein each neuron computes the distance between the input pattern presented to the ANN and the prototype stored therein as standard.
Fig. 2, comprised of Figs. 2a, 2b and 2c, illustrates the basics of the scaling-up technique.
Fig. 3 schematically shows the artificial neural network based system that is required to reduce the invention into practice.
Fig. 4 illustrates the learning operation when the hardware of Fig. 3 is used.
Fig. 5 illustrates the learning operation of Fig. 4 when applied to the example of Fig. 2.
Fig. 6 illustrates the recognition operation when the hardware of Fig. 3 is used.
Fig. 7 illustrates the recognition operation of Fig. 6 when applied to the example of Fig. 2.
Fig. 8 shows the sequence of essential steps of the learning algorithm.
Fig. 9 shows the sequence of essential steps of the recognition algorithm.
Fig. 10 shows the hardware that allows an automatic selection of the data base the best adapted to the input pattern.
Fig. 11 shows the hardware that allows an automatic learning (self-learning) of the scaling to be performed that is adapted to each image.
Fig. 12 shows the hardware used for the recognition of a self-learned image.

### DESCRIPTION OF A PREFERRED EMBODIMENT

Certain embodiments of the present invention as described hereafter incorporate an artificial neural network based system adapted to process an input pattern to generate an output pattern related thereto but having a different number of components which comprises:
means for generating input patterns;
an artificial neural network composed of neurons capable to store input patterns as prototypes with a category associated thereto in the learning phase;
memory means configured to store an intermediate pattern for each stored prototype wherein the components of said intermediate pattern are the coefficients that sallow to determine the estimated values of the output pattern, and to output this intermediate pattern upon receipt of the corresponding category, which is used as a pointer; and,
processor means adapted to receive said input and intermediate patterns and to process them in order to produce said output pattern in the recognition phase.

Preferably, the system further comprises :
storage means connected to said artificial neural network and to said memory to save/restore said input and intermediate patterns respectively.

There is further provided a method for learning an input pattern and an output pattern related thereto having the same or a different number of components which comprises the steps of:
a) providing an input pattern and an output pattern;
b) applying said input and output patterns to a dedicated processor that computes the coefficients that will subsequently allow to determine the estimated values of a similar output pattern in the recognition phase, these coefficients are the components of a so-called intermediate pattern;
c) storing the input pattern in an artificial neural network composed of neurons capable to store said input pattern or data related thereto as a prototype with a category associated thereto; and,
d) storing said intermediate pattern in a memory at a location that can be addressed by said category playing the role of a pointer.

There is still further provided a method for processing an input pattern to generate an output pattern related thereto having the same or a different number of components which comprises the steps of:
a) providing a neural system comprising an artificial neural network composed of neurons capable to store said input pattern or data related thereto as a prototype with a category associated thereto and a memory configured to store coefficients that will subsequently allow to determine the estimated values of a similar output pattern in the recognition phase, these coefficients are the components of a so-called intermediate pattern;
b) providing an input pattern for recognition;
c) applying said input pattern to a dedicated processor that transmits it with or without processing to said artificial neural network to extract the category of the closest prototype stored therein, which in turn acts as a pointer to output said intermediate pattern from the memory; and,
d) applying said input and intermediate patterns to said processor to generate the output pattern using said coefficients.

There are further provided a method and circuits for scaling images using an artificial neural network (ANN) which fully take benefit of the parallel data processing capabilities thereof.

There are further provided a method and circuits for scaling images using an artificial neural network (ANN) that offer high flexibility and accuracy in the determination of the pixel values of the scaled image because the number of prototypes in the ANN is not limited.

There are further provided a method and circuits for scaling images using an artificial neural network (ANN) which offer a response time not only very short but also constant irrespective the number of neurons composing the ANN.

There are further provided a method and circuits for scaling images using an artificial neural network that allows an automatic learning (self-learning) of the scaling to be performed that is adapted to each image.

Note that like reference numerals (with prime, ...) are used through the several drawings to designate identical (corresponding) parts.

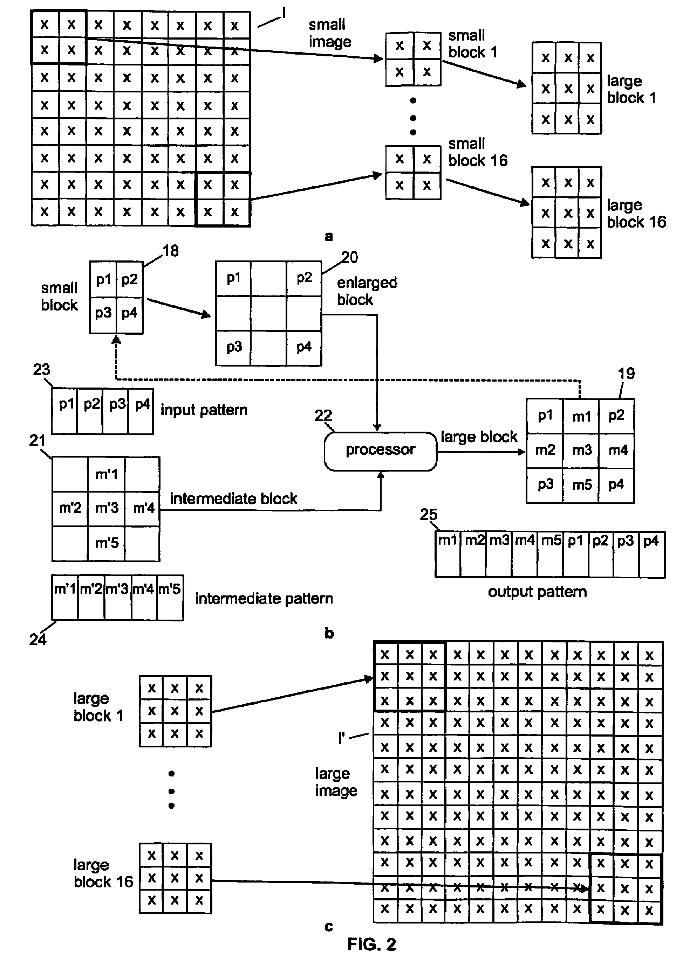

Fig. 2, which is comprised of Figs. 2a, 2b and 2c, illustrates the fundamentals of the image scaling technique to introduce the present invention.

Fig. 2a illustrates a common way of scanning an image. An image I, referred to herein below as the small image, which consists of a block of 8x8 pixels, is scanned in sequence by a sliding analysis window to extract the 16 adjacent elementary 2x2 pixel blocks, referred to herein below as the small blocks, labeled 1 to 16, that compose it. Note that other types of sampling can be performed by the sliding analysis window (e.g. with an overlapping between two consecutive sampling). For instance, a common problem is to increase the size (or format) of the 8x8 pixel small image I in a 12x12 pixel large image without loosing its substance. To that end, still referring to Fig. 2a, as it will be explained later on, this operation will require to transform each 2x2 pixel small block in a 3x3 pixel large block. This scaling operation towards a greater image (referred to as the scaling-up or up-conversion in the technical literature) finds many applications, for instance, in the fields of the television, home cinema, and the like.

Now turning to Fig. 2b, a small block (or template) 18 of 2x2 pixels (or values related to the pixels thereof) must be transformed in a block 19 of 3x3 pixels which has the desired large block size or format. The value of pixels labeled p1 to p4 in block 18 is determined. The four known pixels in block 18 are place at the four corners of a block 20, referred to as the enlarged block (note taht other configurations of blocks 18, 19 and 20 are possible). As apparent in Fig. 2b, the five pixels that are missing are shown in block 19 where they are labeled m1 to m5. The value of these missing pixels has to be estimated by experimentation or by computation. In the latter case, classical interpolation can be used, for instance, m1 could be the average value of pixels p1 and p2, i.e. m1 = (p1+p2)/2 and so on. It is the role of a dedicated processor (not shown) to determine the function that links said estimated values and known values, and to derive the coefficients to be applied to known pixels to estimate the values of the missing pixels. These coefficients labeled m'1 to m'5 fill block 21 referred to as the intermediate block. The coefficients m'1 to m'5 are determined once for all. In normal operation, as soon as a small block 18 is presented, the processor referenced 22 in Fig. 2b, combines blocks 20 and 21 to obtain the completed large block 19. It is the role of processor 22 to determine the value of said estimated pixels m1 to m5 (derived from said coefficients applied to the known pixels) in block 19. As still apparent in Fig. 2b, the enlarged block 20 and the intermediate block 21 thus have the same format as the large block 19. The reverse operation, i.e. to produce a small block from a large block, e.g. the transformation of 3x3 pixel large block 19 in the 2x2 pixel small block 18 can also be envisioned as shown by the dashed line.

Finally, large blocks 19 are the brocks that can be used to build a large image. Now turning to Fig. 2c, large blocks labeled 1 to 16 are used to construct large image I', which represents the up-conversion of small image I.

It is to be noted that the coefficients m'1 to m'5 placed in intermediate block 21, are the polynomial equation coefficients mentioned above. In the example described by reference to Fig. 2, this would mean that these coefficients would be applied to all small blocks 1 to 16 without change, during the up-conversion of small image I in large image I'.

In essence, the present invention significantly departs from the prior art teachings, on a major point, the use of a ZISC ANN and an associated memory that will allow, in the case of the example described by reference to Fig. 2b, to have up to 16 different intermediate blocks 21, one for each small block 1 to 16. In the following description, still referring to Fig. 2b, in order to be consistent with the vocabulary commonly used in the field of neural systems, the four known pixels p1 to p4 form the input pattern 23, the coefficients m'1 to m'5 form the intermediate pattern 24 and finally, the estimated pixels m1 to m5 and the known pixels form the output pattern 25. These values are the components of their respective patterns. In this case, the input pattern has four components and the output pattern has nine components clearly demonstrating the desired change in size or format as a result of the data processing described by reference to Fig. 2b.

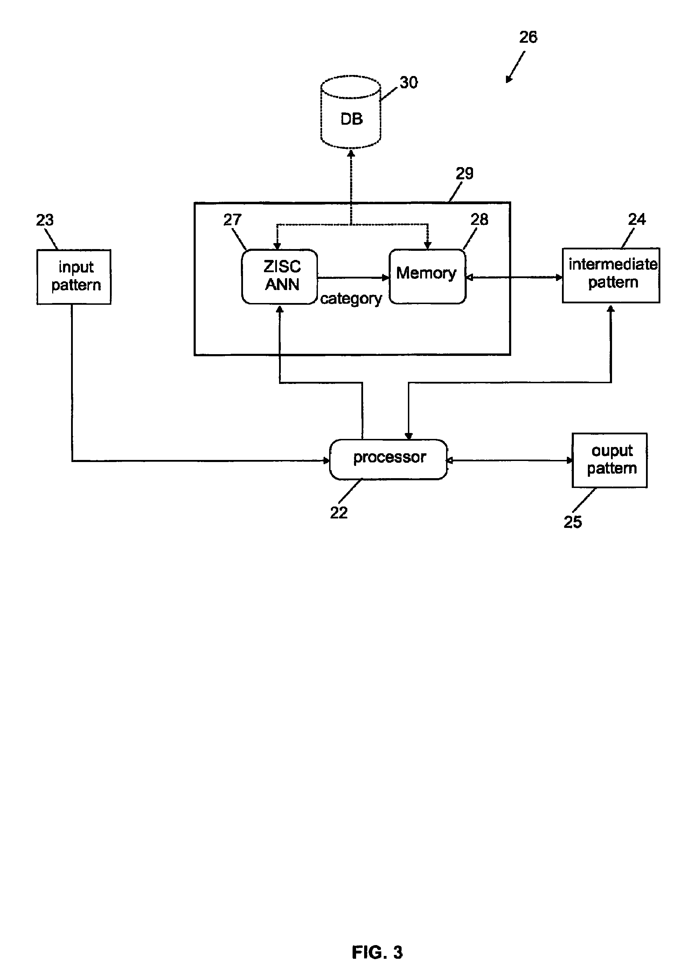

Fig. 3 shows the innovative neural system referenced 26 according to the present invention that is adapted to process an input pattern to generate an output pattern having a different size or format, i.e. having a different number of components. A typical application of neural system 26 is, for instance, to perform the scaling-up of a small image in a large image. Now turning to Fig. 3, the core of the system 26 consists in a ZISC ANN 27 and a memory 28, such as a RAM memory, that are serially connected to compose the pattern converter 29. The input pattern 23 is applied to processor 22, where it can be processed or not (the most general case), before it is applied to the ZISC ANN 27. Processor 22 can either apply the intermediate pattern 24 to the memory 28, or receive said intermediate pattern therefrom. Processor 22 has a bi-directional link to receive/output the output pattern 25. Let us assume that, for the sake of simplicity, the ZISC ANN 27 has already learned a number of input patterns, stored as prototypes in the neurons thereof, and a category is associated to each stored prototype as standard. Let us further assume that to each category there is a corresponding set of coefficients (the intermediate pattern), such as defined by the user through experiments or calculated by a computer, that are already stored in memory 28. Now, these assumptions being made, let us consider that an input pattern 23 is presented to the ZISC ANN 27 in the recognition phase. The category of the closest prototype is output from the ZISC ANN and is used as a pointer to memory 28. In turn, memory 28 outputs the intermediate pattern 24 which corresponds to that category. As apparent in Fig. 3, the input pattern 23 and this intermediate pattern 24 are applied to processor 22 that constructs output pattern 25. The input pattern can be a block of pixels in the field of image processing but could find its origin anywhere else. When an original image, such as small image I shown in Fig. 2a, needs to be up-converted in pattern converter 29, it should be understood that the process described above must be repeated for all the 2x2 pixel small blocks thereof as so many input patterns.

Finally, the content of the prototype memories in the ZISC ANN 27 (in each neuron, a RAM memory stores the prototype components) and the content of memory 28 can be saved in a nonvolatile memory 30 to create a data base. Conversely, this data base can be used to load the prototype components (and associated categories) in the ZISC ANN 27 and the corresponding intermediate patterns in memory 28 whenever desired. For instance, let us assume that pattern converter 29 will be used for scaling-up human faces, the data stored in data base 30 are all the data that have been previously learned in memory 28 for this purpose.

Let us come back to the filling of the memory 28 by the user or the computer and give a few examples for the sake of illustration. For instance, let us consider an electrical signal, the amplitude of which varies as a function of time and a sliding analysis window that samples the signal. Let us assume that the components of an input pattern are formed by p consecutive amplitude values obtained by the sampling of the signal which define a curve. The coefficients describing this curve will be stored in the memory 28 as intermediate patterns and will be used later on, in conjunction with input patterns, to estimate the missing amplitude values for another curve of the same type. The more they are such data stored in the memory, the best will be the estimated values to construct an original signal. The same principle applies in the field of image processing, for still or moving images. But, in this case, the stored data now represents either two-dimension pixel related data (still images) or three-dimension pixel related data (moving images).

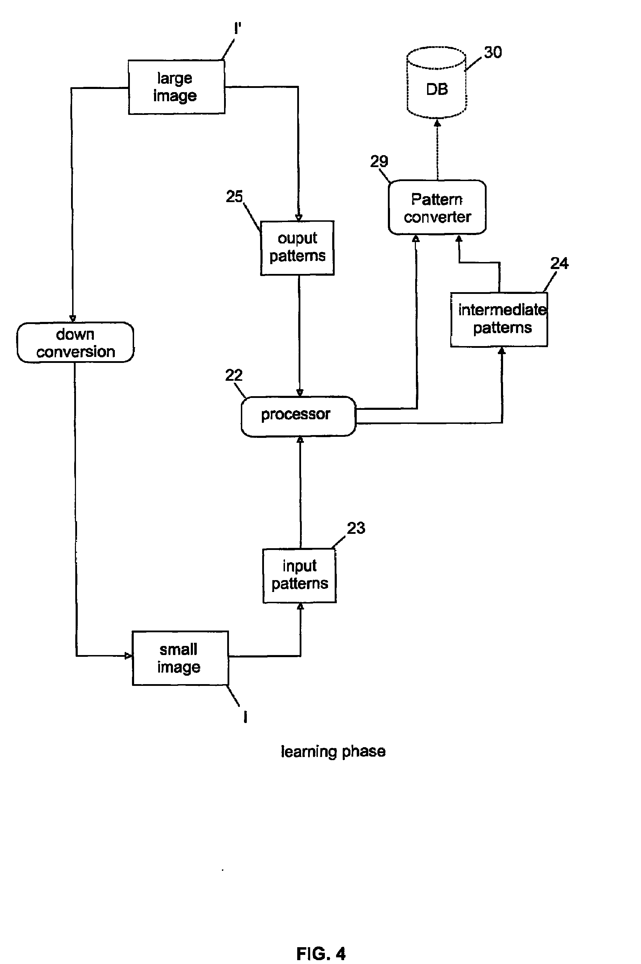

Fig. 4 illustrates the operation of neural system 26 during the learning phase in the particular case of image down-conversion. As apparent from the synoptic shown in Fig. 4, the large image I' is down-converted to produce a small image I having a reduced number of pixels (8x8 instead of 12x12 if we refer to Fig. 2). Then, small image I is scanned to produce small blocks as explained above. The corresponding input patterns 23 are applied to processor 22. On the other hand, the output patterns 25 which result from the scanning of the large image I' are also applied in sequence to processor 22. Processor 22 first determines the coefficients to fill the intermediate patterns, then it sends both the input patterns and the corresponding intermediate patterns to the pattern converter 29. As a final result, input patterns are stored as prototypes in the neurons of the ZISC ANN and the coefficients in corresponding locations of memory of pattern converter 29. Optionally, the content of both neuron memories of the ZISC ANN 27 and the memory 28 can be saved in nonvolatile memory 30. A similar reasoning applies in the case of image up-conversion.

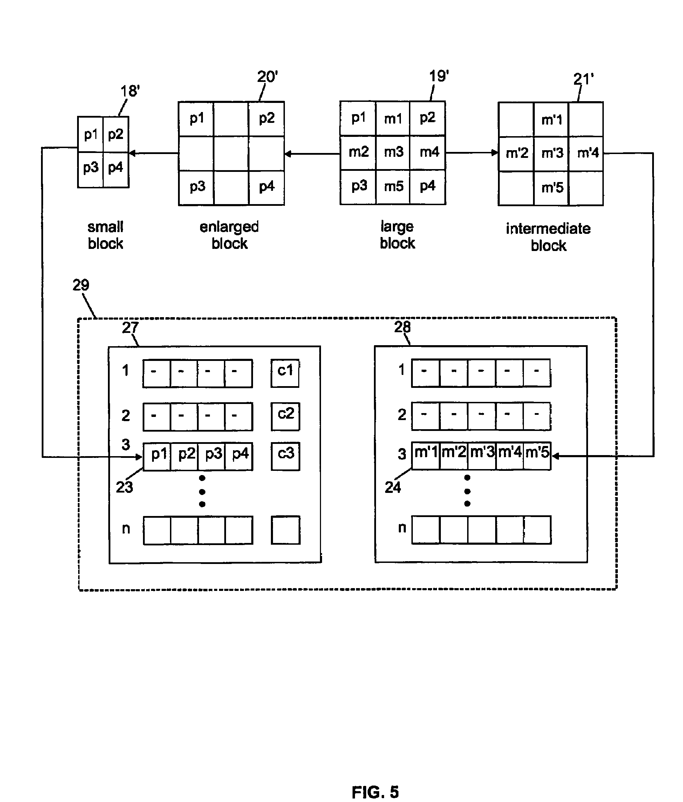

Fig. 5 illustrates the above learning operation when applied to the example described by reference to Fig. 2b. Now turning to Fig. 5, large block 19' to be learned by the pattern converter 29, is first transformed in the enlarged block 20', for instance, by decimation, as known for those skilled in the art. The four known pixels p1 to p4 are then extracted from the decimated block 20' to form small block 18', and stored in the prototype memory of the first free neuron of the ZISC ANN 27 (in this case, the third one) as the components of a prototype. This set of components form the input pattern 23 mentioned above. A category, in this case labeled c3, is assigned to this prototype as standard. On the other hand, the large block 22' is transformed the same way in the intermediate block 21'. The five coefficients m'1 to m'5 are determined as explained above, and stored in a location of memory 28 that has a known correspondence with the prototype storing the input pattern 23, in this case, at the third one as shown in Fig. 5. These five coefficients form the intermediate pattern 24 mentioned above.

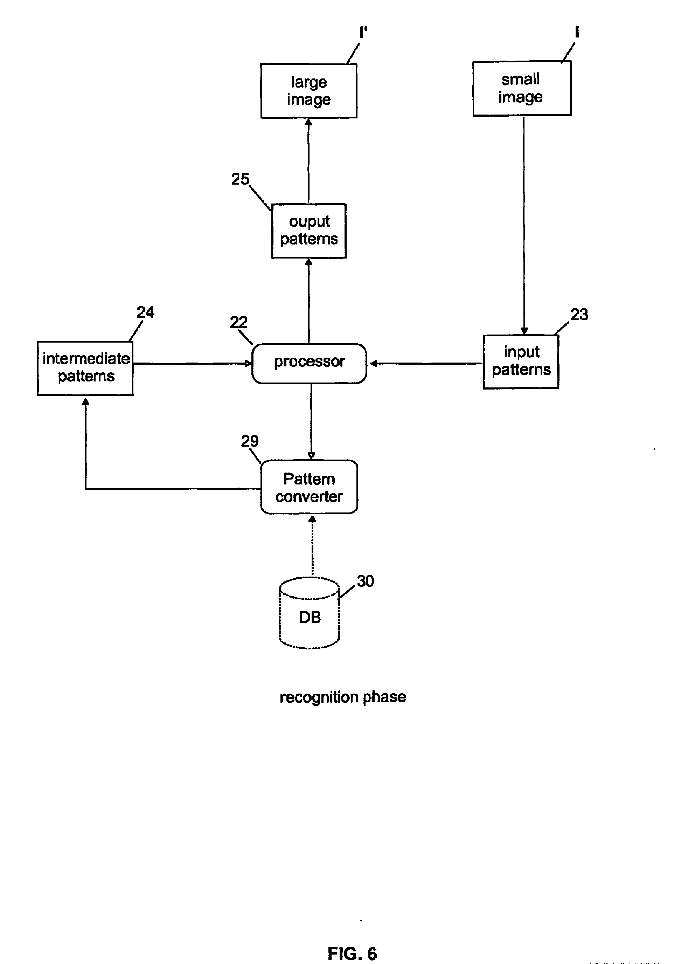

Fig. 6 illustrates the operation of neural system 26 during the recognition phase when input patterns are presented to the ZISC ANN for classification. Now turning to Fig. 6, input patterns 23 resulting from the scanning of small image I, block per block, as explained above, are presented in sequence to processor 22 where they are modified or not (the general case), then applied to the pattern converter 29. In turn, pattern converter 29 generates the corresponding intermediate patterns 24 that are applied to the processor 22. In processor 22, input pattern 23 (modified or not) and intermediate patterns 24 are processed to produce output patterns 25. The large image I' can be now constructed as illustrated above by reference to Fig. 2c. Note that, as a preliminary step, the data base stored in nonvolatile memory 30 can be loaded in the ZISC ANN 27 and in memory 28 at each change of application. For instance, the data base related to landscapes can be loaded in the pattern converter 29 to replace data concerning human faces.

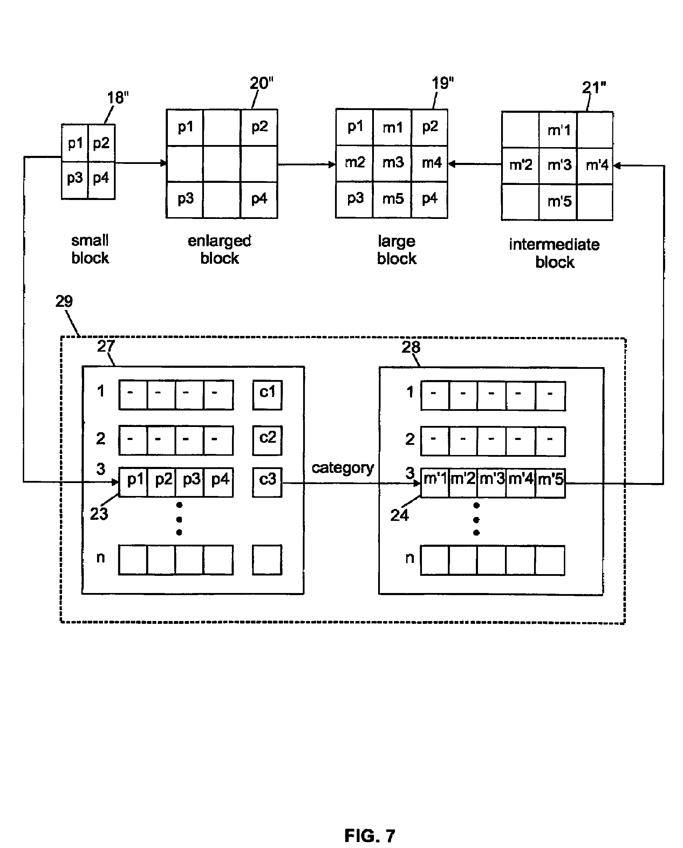

Fig. 7 illustrates the above recognition operation when applied to the example described by reference to Fig. 2a. Now turning to Fig. 7, a small block 18", formed by the four known pixels p1 to P4 is recognized by the third neuron of ZISC ANN 27. In turn, ZISC ANN 27 outputs its category, i.e. C3, which is applied as a pointer to memory 28, in this case, to the third position thereof. The coefficients m'1 to m'5 stored at this location, are then output to create intermediate block 21". On the other hand, small block 18" is also used as a template to create enlarged block 20". Finally, data in blocks 20" and 21" are processed to construct large block 19".

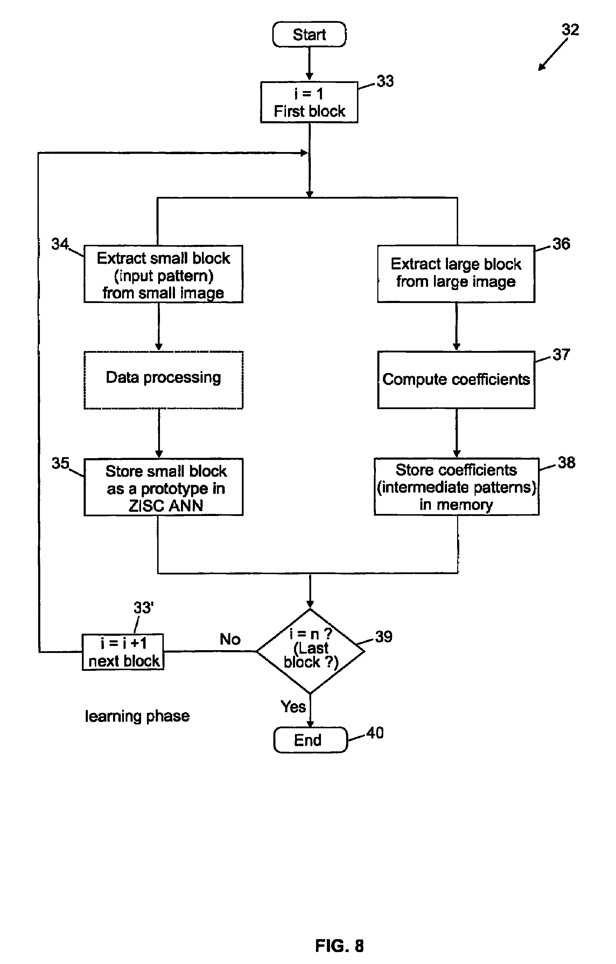

Fig. 8 illustrates the algorithm 32 at the base of the method of the present invention in the learning phase when the neural system 26 shown in Fig. 3 is used, still referring to the specific application to image processing described by reference to Fig. 2, for the sake of simplicity. An index i describing any (small or large) block of the (small or large) image to be processed is initialized to 1 (box 33). As apparent in Fig. 2, in this particular case, index i varies from 1 to 16 corresponding to the 16 blocks constituting either image I or I'. First, the large image I' is transformed into a small image I by standard down-conversion (not shown). The pixel values, i.e. p1 to p4, are extracted from the small block having the current index i (box 34) to form an input pattern 23, then stored as a prototype in the first free neuron of ZISC ANN (box 35). Note that, between steps 34 et 35, an optional step can be performed in processor 22 to process the block data before storage. On the other hand, a large block is extracted from the large image I' (box 36) and the coefficients of the missing pixels, forming an intermediate pattern 24, i.e. m'1 to m'5, are computed (box 37) and stored in memory 28 (box 38). At this stage of the learning phase, the pattern converter 29 is loaded. A test is then performed to determine whether both small and large images I and I' have been fully processed, i.e. if the last block index has been reached (box 39). If yes, the learning of up-conversion data is terminated (box 40), else the steps 34 to 39 are repeated. The neural system 26 is now ready to construct a large image I' from a small image I

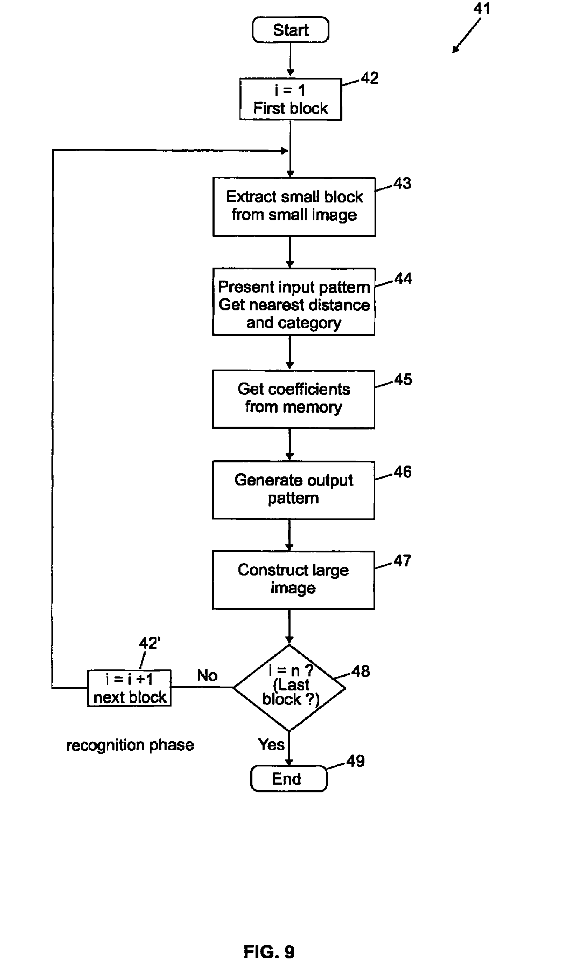

Fig. 9 illustrates the algorithm 41 at the base of the method of the present invention in the recognition phase when the neural system 26 shown in Fig. 3 is used, still referring to the application to image processing described by reference to Fig. 2, for the sake of simplicity. Now turning to Fig. 9, an index i describing the small block rank of the small image I to be processed is initialized to 1 (box 42). The small block having the current indicia i is extracted from the small image (box 43). The corresponding input pattern is presented to the ZISC ANN 27 to get the closest distance and the category associated thereto (box 44). Now, the content of the memory 28 at the location pointed by this category is read, so that the coefficients are available to form the intermediate pattern (box 45). The output pattern can be now generated since it is obtained by combining the input and output patterns (box 46). This output pattern is used to construct the large image I' (box 47). A test is then performed to determine whether the small image I has been fully processed, i.e. if the last block index has been reached (box 48). If yes, the recognition of the small image I is terminated (box 49), else the steps 43 to 48 are repeated.

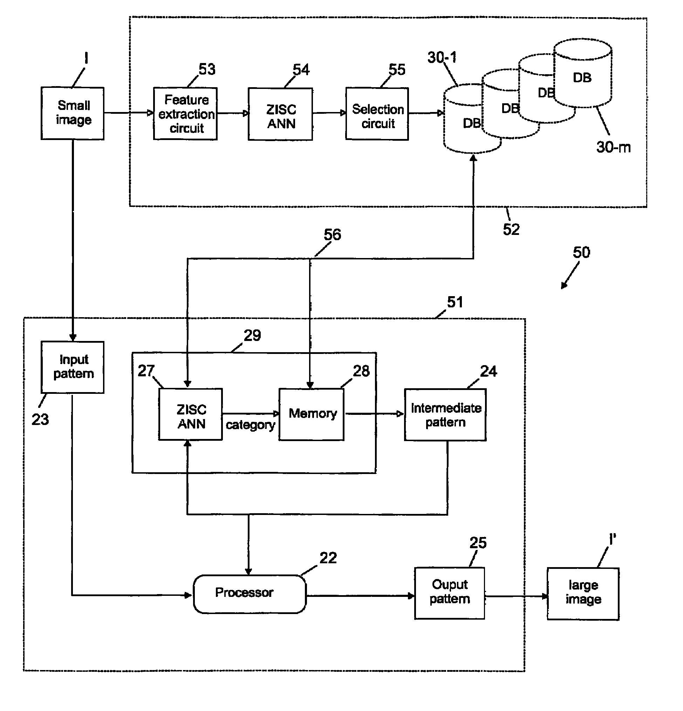

Fig. 10 illustrates an improvement of the neural system 26 that allows an automatic selection of the most adequate data base 30, wherein each data base is adapted to process a specific set of small images. Turning to Fig. 10, the hardware implementation referenced 50 is comprised of blocks 51 and 52. Block 51 is quite identical to neural system 26 shown in Fig. 3. Block 52 comprises a feature extraction circuit 53, a ZISC ANN 54, a data base selection circuit 55 and a plurality of nonvolatile memories 30-1, ... , 30-m. They are standard circuits, the association of a feature extraction circuit and an ANN is usually referred to as a classifier in the technical literature. The operation of this implementation reads as follows. A small image I is applied to the feature extraction circuit 53 that generates the input patterns to be processed by the ZISC ANN 54. For each recognized input pattern, the ZISC ANN will output a category that will select the best data base among said plurality via circuit 55. On the other hand, this small image I is also applied to block 51 which operates as described above by reference to Fig. 6. The hardware implementation 50 shown in Fig. 10 allows to load the content of the most adequate data base in the pattern converter 29 via bus 56.

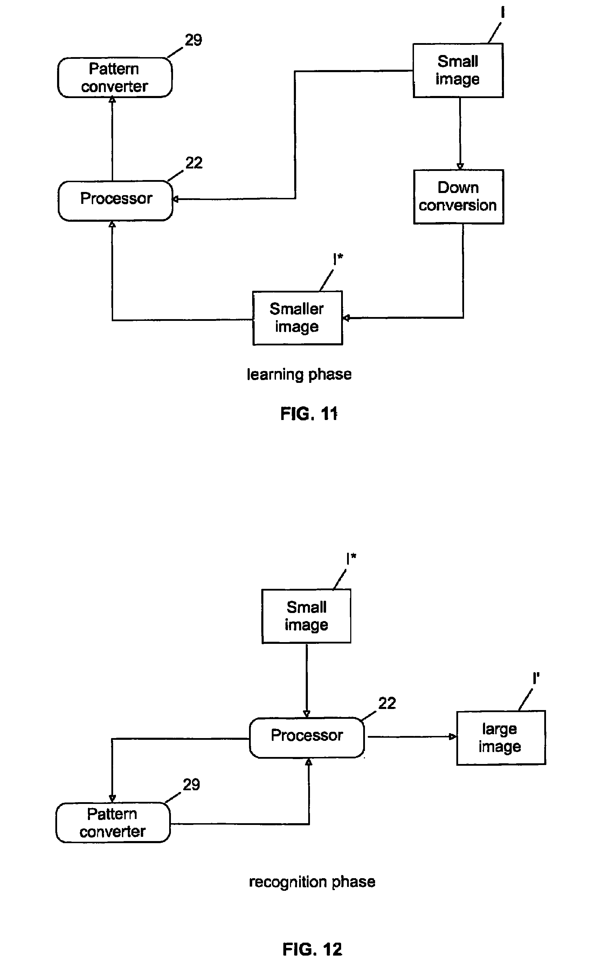

Fig. 11 illustrates the case where the learning uses the image to be up-converted. In Fig. 6, the small image is only used for up-conversion to construct a large image in the recognition phase. Now, a small image is used not only for the recognition phase, but also in the learning phase, so that the up-conversion process now includes a self-learning step. Now turning to Fig. 11, the small image I is down-converted in a smaller image I*. The input patterns derived from the blocks forming said smaller image are presented to the pattern converter 29 (via processor 22), then stored as prototypes in the ZISC ANN part thereof. On the other hand, the output patterns derived from the small image I, are applied to processor 22 to compute the coefficients that form the intermediate pattern. In turn, the intermediate patterns are applied to pattern converter 29 and stored in the memory part thereof. This type of learning allows the subsequent recognition of small images that have been learned, allowing thereby an outstanding accuracy of the recognition of such small images. In essence, the methods described by reference to Figs. 11 and 4 are the same, it just suffices to exchange images I and I' on the one hand and images I* and I on the other hand.

As apparent in Fig. 12, in this case, there is no change in the recognition phase of a small image with regards with the description given above by reference to Fig. 6.

## Claims

1. A system for scaling images using a neural network ; said system comprising:
means for generating a down-converted image from an input image, wherein said input image comprises a larger number of pixels than the associated input pattern's down-converted image;
means for generating a plurality of small block patterns from said down-converted image;
means for computing a set of coefficients of a transform function describing conversion of each small block pattern from said down-converted image to a corresponding large block pattern of said input image, each set of coefficients being a components of a respective intermediate pattern;
an artificial neural network (27) composed of neurons capable of storing said plurality of small block patterns from said down-converted image as prototypes with a category associated with each prototype;
memory means (28) configured to store said intermediate patterns (24) for each respective stored prototype and for outputting a selected intermediate pattern of the stored intermediate patterns upon receipt of a corresponding category; and
processor means (22) for receiving a selected small block pattern derived from said input image and for transmitting said selected small block pattern to the artificial neural network for extracting the category of the closest prototype stored therein, which acts as a pointer for outputting retrieving the closest intermediate pattern from the memory means, and for applying the closest retrieved intermediate pattern to the selected small block pattern to obtain the corresponding part of the pattern of an up-converted image from said input image.

2. The system of claim 1 wherein the artificial neural network and the memory are serially connected and the category is used as a pointer for the memory.

3. The system of claim 2 wherein said memory is a DRAM.

4. The system of claim 1 further comprising :
storage means (30) connected to said artificial neural network and to said memory means for saving and restoring the small block and intermediate patterns respectively.

5. The system of claim 4 wherein said storage means consist of a plurality of non volatile memories (30-1, ... , 30-m).

6. The system of claim 5 further comprising :
selection means (55) adapted to select the non volatile memory location having a pattern prototype that is closest to the input pattern.

7. The system of claim 6 wherein said selection means includes a feature extraction circuit, an artificial neural network and a data base selection circuit that are serially connected.

8. The system according to any above claim wherein each small block pattern describes a block of pixels and the output corresponding large block pattern is a scaled version of the input small block pattern.

9. A method for scaling images using a neural network comprising the steps of:
generating a down-converted image from an input image, wherein said input image comprises a larger number of pixels than the associated input pattern's down-converted image;
generating a plurality of small block patterns from said down-converted image;
computing a set of coefficients of a transform function describing conversion of each small block pattern from the down-converted image to a corresponding large block pattern of said input image, each set of coefficients being a components of a respective intermediate pattern;
storing said plurality of small block patterns from said down-converted image as prototypes with a category associated with each prototype;
storing said intermediate patterns (24) for each respective stored prototype and for outputting a selected intermediate pattern of the stored intermediate patterns upon receipt of corresponding category;
receiving a selected small block pattern derived from said input image; extracting the category of the closest prototype therto, which acts as a pointer for outputting retrieving the closest intermediate pattern from the memory means, and
applying the closest retrieved intermediate pattern to the selected small block pattern to obtain the corresponding part of the pattern of an up-converted image from the input image.

10. The method of claim 9 further comprising the step of :
storing the input and intermediate patterns in a non volatile memory to establish a data base that can be subsequently used to restore them.

## Patentansprüche

1. System, um Bilder unter Verwendung eines neuronalen Netzwerks zu skalieren; wobei das System Folgendes umfasst:
ein Mittel, um von einem Eingangsbild ein abwärtsgewandeltes Bild zu erzeugen, wobei das Eingangsbild eine größere Anzahl von Pixeln umfasst als das zugehörige abwärtsgewandelte Bild des Eingangsmusters;
ein Mittel, um eine Vielzahl von kleinen Blockmustern von dem abwärtsgewandelten Bild zu erzeugen;
ein Mittel, um einen Satz von Koeffizienten einer Transformationsfunktion, die die Umwandlung eines jeden kleinen Blockmusters von dem abwärtsgewandelten Bild in ein entsprechendes großes Blockmuster des Eingangsbildes beschreibt, zu berechnen, wobei jeder Satz von Koeffizienten eine Komponente eines jeweiligen Zwischenmusters ist;
ein künstliches neuronales Netzwerk (27), das aus Neuronen besteht, die die Vielzahl der kleinen Blockmuster von dem abwärtsgewandelten Bild als Prototypen speichern können, wobei jedem Prototyp eine Kategorie zugeordnet wird;
ein Speichermittel (28), das so konfiguriert ist, dass es die Zwischenmuster (24) für jeden einzelnen gespeicherten Prototypen speichert und um nach dem Empfang einer entsprechenden Kategorie ein ausgewähltes Zwischenmuster der gespeicherten Zwischenmuster auszugeben; und
ein Prozessormittel (22), um ein ausgewähltes kleines Blockmuster, das von dem Eingangsbild abgeleitet wurde, zu empfangen und um das ausgewählte kleine Blockmuster an das künstliche neuronale Netzwerk zu senden, um die Kategorie des nächstliegenden Prototyps, der darin gespeichert ist, zu entnehmen, die als ein Zeiger für die Ausgabe des Abrufs des nächstliegenden Zwischenmusters aus dem Speichermittel dient, und um das nächstliegende abgerufene Zwischenmuster auf das ausgewählte kleine Blockmuster anzuwenden, um den entsprechenden Teil des Musters eines aufwärtsgewandelten Bildes von dem Eingangsbild zu erhalten.

2. System nach Anspruch 1, wobei das künstliche neuronale Netzwerk und der Speicher in Reihe geschaltet sind und die Kategorie als ein Zeiger für den Speicher verwendet wird.

3. System nach Anspruch 2, wobei es sich bei dem Speicher um einen DRAM handelt.

4. System nach Anspruch 1, das des Weiteren Folgendes umfasst:
ein Speichermittel (30), das mit dem künstlichen neuronalen Netzwerk und mit dem Speichermittel verbunden ist, um die kleinen Blockmuster beziehungsweise die Zwischenmuster zu sichern und wiederherzustellen.

5. System nach Anspruch 4, wobei das Speichermittel aus einer Vielzahl von nichtflüchtigen Speichern (30-1, ..., 30-m) besteht.

6. System nach Anspruch 5, das des Weiteren Folgendes umfasst:
ein Auswahlmittel (55), das so ausgelegt ist, dass es den nichtflüchtigen Speicherplatz auswählt, welcher einen Muster-Prototypen hat, der dem Eingangsmuster am nächstliegenden ist.

7. System nach Anspruch 6, wobei das Auswahlmittel eine Merkmal-Entnahmeschaltung, ein künstliches neuronales Netzwerk und eine Datenbank-Auswahlschaltung enthält, die in Reihe geschaltet sind.

8. System nach einem der vorstehenden Ansprüche, wobei jedes kleine Blockmuster einen Block aus Pixeln beschreibt und wobei es sich bei dem ausgegebenen entsprechenden großen Blockmuster um eine skalierte Version des eingegebenen kleinen Blockmusters handelt.

9. Verfahren zum Skalieren von Bildern unter Verwendung eines neuronalen Netzwerks, wobei das Verfahren die folgenden Schritte umfasst:
Erzeugen eines abwärtsgewandelten Bildes von einem Eingangsbild, wobei das Eingangsbild eine größere Anzahl von Pixeln umfasst als das zugehörige abwärtsgewandelte Bild des Eingangsmusters;
Erzeugen einer Vielzahl von kleinen Blockmustern von dem abwärtsgewandelten Bild;
Berechnen eines Satzes von Koeffizienten einer Transformationsfunktion, die die Umwandlung eines jeden kleinen Blockmusters von dem abwärtsgewandelten Bild in ein entsprechendes großes Blockmuster des Eingangsbildes beschreibt, wobei jeder Satz von Koeffizienten eine Komponente eines jeweiligen Zwischenmusters ist;
Speichern der Vielzahl der kleinen Blockmuster von dem abwärtsgewandelten Bild als Prototypen, wobei jedem Prototyp eine Kategorie zugeordnet wird;
Speichern der Zwischenmuster (24) für jeden einzelnen gespeicherten Prototypen und um nach dem Empfang einer entsprechenden Kategorie ein ausgewähltes Zwischenmuster der gespeicherten Zwischenmuster auszugeben;
Empfangen eines ausgewählten kleinen Blockmusters, das von dem Eingangsbild abgeleitet wurde; Entnehmen der Kategorie des Prototyps, der diesem am nächsten liegt, wobei die Kategorie als ein Zeiger für die Ausgabe des Abrufs des nächstliegenden Zwischenmusters aus dem Speichermittel dient, und
Anwenden des nächstliegenden abgerufenen Zwischenmusters auf das ausgewählte kleine Blockmuster, um den entsprechenden Teil des Musters eines aufwärtsgewandelten Bildes von dem Eingangsbild zu erhalten.

10. Verfahren nach Anspruch 9, das des Weiteren den folgenden Schritt umfasst:
Speichern der Eingangs- und Zwischenmuster in einem nichtflüchtigen Speicher, um eine Datenbank einzurichten, die anschließend zu deren Wiederherstellung verwendet werden kann.

## Revendications

1. Système pour mettre à l'échelle des images, utilisant un réseau neuronal ; ledit système comprenant :
des moyens, pour générer une image down-convertie à partir d'une image d'entrée, dans lequel ladite image d'entrée comprend un plus grand nombre de pixels que l'image down-convertie du motif d'entrée associé ;
des moyens, pour générer une pluralité de motifs à petits blocs à partir de ladite image down-convertie ;
des moyens, pour calculer un jeu de coefficients d'une fonction de transformation décrivant la conversion de chaque motif à petit blocs, à partir de ladite image down-convertie, en un motif à gros blocs correspondant de ladite image d'entrée, chaque jeu de coefficients étant un composant d'un motif intermédiaire respectif ;
un réseau neuronal (27) artificiel, composé de neurones capables de stocker ladite pluralité de motifs à petits blocs provenant de ladite image down-convertie, en tant que prototypes, avec une catégorie associée à chaque prototypes ;
des moyens de mémoire (28), configurés pour stocker lesdits motifs intermédiaires (24) pour chaque prototype stocké respectif et pour fournir en sortie un motif intermédiaire sélectionné des motifs intermédiaires stockés, à réception d'une catégorie correspondante ; et
des moyens de processeur (22), pour recevoir un motif à petits blocs sélectionné, dérivé de ladite image d'entrée, et pour transmettre ledit motif à petits blocs sélectionné au réseau neuronal artificiel, pour extraction de la catégorie du prototype le plus proche y étant stocké, qui agit comme un pointeur, pour fournir en sortie la récupération du motif intermédiaire le plus proche à partir des moyens de mémoire, et pour appliquer le motif intermédiaire récupéré le plus proche au motif à petits blocs sélectionné, de manière à obtenir la partie correspondante du motif d'une image up-convertie à partir de ladite image d'entrée.

2. Système selon la revendication 1, dans lequel le réseau neuronal artificiel et la mémoire sont connectés en série et la catégorie est utilisée comme un pointeur pour la mémoire.

3. Système selon la revendication 2, dans lequel ladite mémoire est une DRAM.

4. Système selon la revendication 1, comprenant en outre :
des moyens de stockage (30), connectés audit réseau neuronal artificiel et auxdits moyens de mémoire, pour sauvegarder et restaurer les motifs à petits blocs et intermédiaires, respectivement.

5. Système selon la revendication 4, dans lequel lesdits moyens de stockage sont constitués d'une pluralité de mémoires non volatiles (30-1, ..., 30-m).

6. Système selon la revendication 5, comprenant en outre :
des moyens de sélection (55), adaptés pour sélectionner l'emplacement de mémoire non volatile ayant un prototype de motif le plus proche du motif d'entrée.

7. Système selon la revendication 6, dans lequel lesdits moyens de sélection comprennent un circuit d'extraction de caractéristiques, un réseau neuronal artificiel et un circuit de sélection de base de données, connectés en série.

8. Système selon l'une quelconque des revendications précédentes, dans lequel chaque motif à petits blocs décrit un bloc de pixels et le motif à gros blocs correspondant de sortie est une version mise à l'échelle du motif à petits blocs d'entrée.

9. Procédé pour mettre à l'échelle des images, utilisant un réseau neuronal, comprenant les étapes consistant à :
générer une image down-convertie à partir d'une image d'entrée, dans lequel ladite image d'entrée comprend un plus grand nombre de pixels que l'image down-convertie du motif d'entrée associé ;
générer une pluralité de motifs à petits blocs à partir de ladite image down-convertie ;
calculer un jeu de coefficients d'une fonction de transformation décrivant la conversion de chaque motif à petit blocs, à partir de l'image down-convertie, en un motif à gros blocs correspondant de ladite image d'entrée, chaque jeu de coefficients étant un composant d'un motif intermédiaire respectif ;
stocker ladite pluralité de motifs à petits blocs provenant de ladite image down-convertie, en tant que prototypes, avec une catégorie associée à chaque prototype ;
stocker lesdits motifs intermédiaires (24) pour chaque prototype stocké respectif et pour fournir en sortie un motif intermédiaire sélectionné des motifs intermédiaires stockés, à réception d'une catégorie correspondante ; et
recevoir un motif à petits blocs sélectionné, dérivé de ladite image d'entrée ; extraire la catégorie du prototype le plus proche y étant stocké, qui agit comme un pointeur, pour fournir en sortie la récupération du motif intermédiaire le plus proche à partir des moyens de mémoire, et
appliquer le motif intermédiaire récupéré le plus proche au motif à petits blocs sélectionné, de manière à obtenir la partie correspondante du motif d'une image up-convertie à partir de ladite image d'entrée.

10. Procédé selon la revendication 9, comprenant en plus l'étape consistant à :
stocker les motifs d'entrée et intermédiaires dans une mémoire non volatile, de manière à établir une base de données poussant être ensuite utilisée pour les restaurer.
